# EUROPÄISCHE PATENTSCHRIFT

(11) **EP 3 715 152 B1**
(45) Veröffentlichungstag und Bekanntmachung des Hinweises auf die Patenterteilung: **09.03.2022**
(21) Anmeldenummer: 20154477.2
(22) Anmeldetag: 30.01.2020
(51) Int. Cl.: B60C 23/04

(54) **VERFAHREN ZUR ÜBERWACHUNG VON REIFENDRUCKWERTEN AN FAHRZEUGREIFEN**
METHOD FOR MONITORING TYRE PRESSURE OF VEHICLE TYRES
PROCÉDÉ DE SURVEILLANCE DES VALEURS DE PRESSION DE PNEUS DE VÉHICULE

(30) Priorität: 27.03.2019 DE 102019204286
(43) Veröffentlichungstag der Anmeldung: 30.09.2020
(73) Patentinhaber: Continental Reifen Deutschland GmbH, 30165 Hannover (DE)
(72) Erfinder: Sahlmüller, Baldo, 30419 Hannover (DE)
(74) Vertreter: Continental Corporation

(56) Entgegenhaltungen:
- FR-A1- 2 680 136
- US-A1- 2017 080 762

## Beschreibung

Zur Überwachung von Reifenzuständen, insbesondere einem Reifendruck, von Reifen eines Nutzfahrzeuges sind Reifen-Sensor-Module bzw. Reifenmodule bekannt, die beispielsweise im Inneren eines Reifens angeordnet sind. Derartige Reifen-Sensor-Module sind ausgebildet, positionsgebunden einen Reifendruck zu erfassen, zu verarbeiten und an ein elektronisches Steuergerät (ECU) eines Überwachungssystems zu übertragen. Das Steuergerät nimmt das Datentelegramm über ein Empfangsmodul des Überwachungssystems auf und gibt in Abhängigkeit von Grenzwerten ein Warnsignal an den Fahrer aus, beispielsweise wenn an einem der Reifen ein Reifendruck unterhalb eines Grenzwertes festgestellt wurde. Ein Beispiel für ein solches Reifen-Sensor-Modul offenbart die DE 102 43 441 A1.

Die FR2680136A1 und US2017/080762A1 offenbaren außerdem bekannten Verfahren, die eine Reifendruckkontrolle betreffen.

Es sind eine Vielzahl von Reifendruckkontrollsystemen bekannt, mit denen Druckverluste erkannt werden können.

Es gibt Reifendruckkontrollsysteme, bei denen einzelne Fahrzeugreifen mit Reifenmodulen ausgestattet sind, die insbesondere den Reifendruck und die Reifentemperatur aufzeichnen. Die Reifentemperatur wird insbesondere dazu genutzt, um den Reifendruck mit einer hohen Genauigkeit ermitteln zu können.

Außerdem kann es die Situation geben, dass ein Nutzfahrzeuganhänger mit Reifen ausgestattet wird, die einzelne Reifenmodule aufweisen, wobei weder der Anhänger noch die Zugmaschine eine eigenständige Sende- und Empfangseinheit für die Auswertung der Daten für die Reifenmodule aufweist.

Der Erfindung liegt die Aufgabe zugrunde, ein Verfahren bereitzustellen, mit dem Reifendruckkontrollsysteme verbessert werden.

Gelöst wird die Aufgabe durch ein Verfahren nach Anspruch 1.

Ein Vorteil des Verfahrens besteht darin, dass mit dem Einsatz des neuen Verfahrens herkömmliche Reifendruckkontrollsysteme wesentlich verbessert werden. Auf dem Speicher des Reifenmoduls werden insbesondere die stabilen Temperaturwerte und stabilen Druckwerte unter konstanten Bedingungen abgespeichert. Dadurch werden wesentlich weniger Fehlwarnungen generiert.

Insbesondere bei Fahrtbeginn mit einem Fahrzeug können Reifendruckwerte gemessen werden, die nicht mit dem realen Reifendruck übereinstimmen bzw. die Luftmenge im Reifen repräsentieren.

Das liegt daran, dass sich die Temperatur im Reifen am Anfang von der Temperatur des Temperatursensors im Reifenmodul unterscheiden kann. Wenn anschließend der mit einer Temperatur kompensierte Druckwert berechnet wird, stimmt dieser Druckwert nicht mit dem realen Druckwert überein.

Mit dem neuen Verfahren wird auf einfache Weise sichergestellt, dass nur ein stabiler Temperaturwert und stabiler Druckwert auf dem Speicher des Reifenmoduls abgelegt wird. Dabei wird ebenfalls beachtet, dass beide Werte im Wesentlichen gleichzeitig bzw. in einer Zeitdifferenz von weniger als einer Minute erfasst werden. Dadurch lässt sich anschließend ein temperaturkompensierter Reifendruckwert ermitteln.

Wenn das Fahrzeug an einer Basisstation von einem Flottenbetreiber vorbeifährt, werden nur die stabilen Temperaturwerte und stabilen Druckwerte übermittelt.

Auf diese Weise werden Fehlwarnungen minimiert.

In einer vorteilhaften Weiterbildung der Erfindung ist vorgesehen, dass bei der Bestimmung des stabilen Temperaturwertes, der stabile Temperaturwert dann vorliegt, wenn der letzte aktuelle Temperaturwert um weniger als ca. 1 Grad Celsius von allen zwischengespeicherten Temperaturwerten abweicht.

Bei Vorliegen von dieser geringen Temperaturdifferenz von weniger als ca. 1 Grad Celsius hat sich der stabile Temperaturwert mit einer hohen Genauigkeit im Reifen eingestellt.

In einer weiteren vorteilhaften Weiterbildung der Erfindung ist vorgesehen, dass bei der Bestimmung des stabilen Reifendruckwertes, der stabile Reifendruckwert dann vorliegt, wenn der letzte aktuelle Reifendruckwert um weniger als ca. 0,05 bar von allen zwischengespeicherten Temperaturwerten abweicht.

Bei dieser geringen Druckdifferenz hat sich der stabile Reifendruckwert mit einer sehr hohen Genauigkeit eingestellt.

In einer weiteren vorteilhaften Weiterbildung der Erfindung ist vorgesehen, dass bei Schritt b) das definierte Zeitintervall ca. 15 Minuten beträgt.

Mit diesem Zeitintervall lassen sich der Temperaturverlauf und der Druckverlauf auf einfache Weise analysieren.

In einer weiteren vorteilhaften Weiterbildung der Erfindung ist vorgesehen, dass das Reifenmodul alle 16 Sekunden oder alle 128 Sekunden die stabilen Temperaturwerte und stabilen Reifendruckwerte mit einem Funktelegramm versendet.

Dadurch wird sichergestellt, dass die Basisstation die versendeten Daten mit einer hohen Wahrscheinlichkeit zu einem bestimmten Zeitpunkt empfangen kann.

In einer vorteilhaften Weiterbildung der Erfindung ist vorgesehen, dass die von der Basisstation ausgewerteten Daten an einen zentralen Rechner weitergeleitet werden, wobei mit dem zentralen Rechner die Daten ausgewertet werden, wobei die Warnmeldung von dem zentralen Rechner initiiert wird.

Der Vorteil eines zentralen Rechners besteht darin, dass er die Messdaten des einzelnen Reifens mit vielen anderen Daten über das Fahrzeug oder über den Reifentyp vergleichen kann. Dadurch können insbesondere Fehlwarnungen minimiert werden.

In einer weiteren vorteilhaften Weiterbildung der Erfindung ist vorgesehen, dass die Basisstation am Einfahrtstor eines Flottenbetreibers angeordnet ist, damit die stabilen Temperaturwerte und die stabilen Reifendruckwerte regelmäßig erfasst werden können.

In der Regel werden alle Nutzfahrzeuge eines Flottenbetreibers in regelmäßigen Abständen durch das Eingangstor des Flottenbetreibers fahren.

Wenn das Eingangstor ebenfalls eine Schranke aufweist, ist sichergestellt, dass das Fahrzeug in der Nähe der Basisstation kurzzeitig anhalten wird.

Diese Zeitspanne ist im Normalfall ausreichend, damit die Empfangseinheit an der Basisstation die entsprechenden Daten der Fahrzeugreifen empfangen kann.

In einer weiteren vorteilhaften Weiterbildung der Erfindung ist vorgesehen, dass das Reifenmodul auf einer Reifeninnenseite eines Fahrzeugreifens angeordnet ist, wobei der Temperatursensor die Temperaturwerte des Laufstreifens und/ oder der Seitenwände erfasst.

Anhand eines Ausführungsbeispiels soll die Erfindung näher erläutert werden. Es zeigt:
Fig. 1: ein Zugfahrzeug mit einem NFZ-Anhänger
Fig. 2: Temperatur- und Reifendruckverläufe

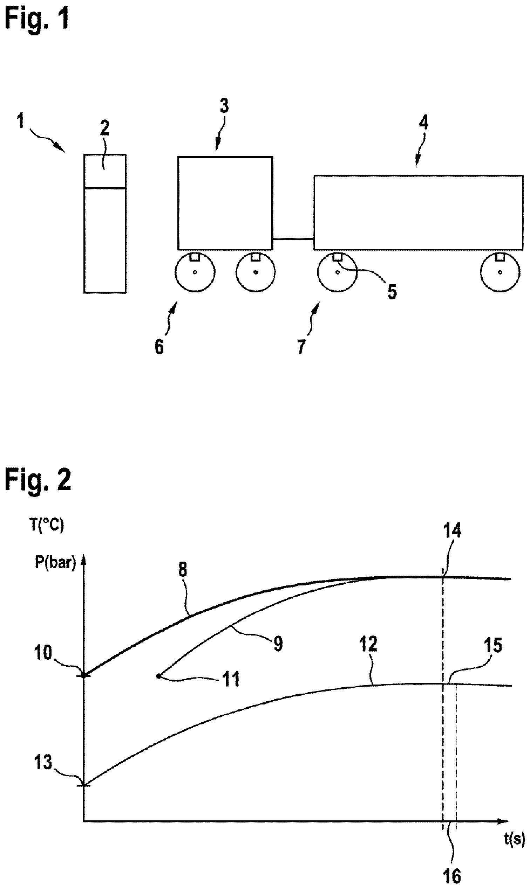

Die Fig. 1 zeigt ein Ausführungsbeispiel.

Es ist schematisch eine Nutzfahrzeugzugmaschine und ein Nutzfahrzeuganhänger dargestellt. Die Nutzfahrzeugzugmaschine 3 und der Nutzfahrzeuganhänger 4 weisen jeweils eine Vielzahl von Fahrzeugreifen 6 und 7 auf, die mit Reifenmodulen ausgestattet sind. Die Reifenmodule 5 sind auf der Reifeninnenseite angeordnet und können mit entsprechenden Sensoren den Reifendruck und die Reifentemperatur messen.

Weder die Zugmaschine 3 noch der Anhänger 4 besitzen bei diesem Ausführungsbeispiel eine eigene Sende- und Empfangseinheit, um die Signale von den Reifenmodulen empfangen zu können. Das dargestellte Nutzfahrzeug ist beispielsweise ein Nutzfahrzeug eines Flottenbetreibers. Das Fahrzeug fährt in regelmäßigen Abständen an der Basisstation 1 des Flottenbetreibers vorbei.

Die Basisstation 1 könnte beispielsweise am Einfahrtstor des Flottenbetreibers installiert sein. Die Basisstation 1 besitzt eine Empfangseinheit, mit der insbesondere die Signale von den Reifenmodulen 5 automatisiert empfangen werden können. Die Reifenmodule 5 senden die erfassten Daten, wie insb. den stabilen Temperaturwert und den stabilen Reifendruckwert der entsprechenden Fahrzeugreifen an die Basisstation 1. Von dort aus werden die Daten an einen zentralen Rechner weitergeleitet, der beispielsweise von einem Reifenhersteller betrieben wird.

Wenn die erfassten Daten, insb. der stabile Reifendruckwert, einen vorgegebenen Toleranzwert überschreitet, wird eine Warnmeldung initiiert, die nachfolgend an den Flottenbetreiber weitergeleitet wird. Die Warnmeldung könnte beispielsweise die Information enthalten, dass ein bestimmter Fahrzeugreifen an einem bestimmten Fahrzeug des Flottenbetreibers eine Auffälligkeit in Verbindung mit einem zu niedrigen Reifendruck aufweist.

Es wird empfohlen, den entsprechenden Fahrzeugreifen in einer Reifenwerkstatt überprüfen zu lassen.

Eine signifikante Abweichung des stabilen Reifendruckwertes von einem vorgegebenen Wert könnte beispielsweise bedeuten, dass der Reifendruck ca. 10 % niedriger ist, als der für den Fahrzeugreifen vorgeschriebene Reifendruck. Mit dem neuen Verfahren wird sichergestellt, dass mit den Reifenmodulen nur die stabilen Temperaturwerte und die stabilen Reifendruckwerte übermittelt werden.

Die Figur 2 zeigt unterschiedliche Temperaturverläufe und einen Verlauf eines Reifendrucks im Fahrzeugreifen.

Der Kurvenverlauf 8 zeigt die Temperaturkurve des Reifens bzw. des Reifenhohlraums. Der Reifen besitzt am Anfang bzw. zum Fahrtbeginn die Temperatur 10.

Anschließend steigt die Reifentemperatur aufgrund einer Erwärmung des Fahrzeugreifens in der dargestellten Weise an. Nach einem bestimmten Zeitraum wird ein stabiler Temperaturwert 14 erreicht, der unter konstanten Bedingungen vorliegt. Der Kurvenverlauf 9 zeigt die Temperaturkurve des Temperatursensors im Reifenmodul. Es dauert eine bestimmte Zeit bis die Anfangstemperatur 11 des Temperatursensors langsam und kontinuierlich ansteigt. Nach einer bestimmten Zeit haben beide Temperaturverläufe 8 und 9 den stabilen Temperaturwert 14 erreicht.

Der stabile Temperaturwert wird aus dem Temperaturverlauf der Temperaturkurve 9 ermittelt.

Dabei wird der jeweils aktuell gemessene Temperaturwert mit den letzten gemessenen Temperaturwerten verglichen. Wenn die Temperaturdifferenz weniger als 1 Grad Celsius beträgt, wird der entsprechende Wert als aktueller stabiler Temperaturwert im Speicher des Sensors abgelegt. Nur der jeweils aktuelle stabile Temperaturwert wird später mit einem Funktelegramm an die Basisstation versendet.

Die untere Kurve 12 zeigt den Reifendruckverlauf im Reifen.

Bei Fahrtbeginn beträgt der Anfangsdruck 13 einen bestimmten Wert. Der Reifendruck steigt anschließend kontinuierlich an und nimmt nach einer bestimmten Zeit einen stabilen Reifendruckwert an. Nur der stabile Reifendruckwert wird später mit einem Funktelegramm an eine Basisstation übermittelt.

Die Zeitdifferenz 16 zeigt die Zeit von maximal einer Minute an, in der beide Werte (stabiler Temperaturwert und Reifendruckwert) erfasst werden sollten. Dadurch lässt sich anschließend ein temperaturkompensierter Reifendruckwert bestimmen.

Die Luftmenge im Reifen ist in diesem Bild als konstant angenommen. Aufgrund der verzögerten gemessenen Temperaturkurve lässt sie sich aber insbesondere zu Beginn oder zum Ende einer Fahrt nicht genau bestimmen.

Mit dem neuen Verfahren wird sichergestellt, dass die Anzahl von Fehlwarnungen deutlich reduziert wird.

### Bezugszeichenliste

- 1: Basisstation
- 2: Empfangseinheit
- 3: Zugmaschine
- 4: NFZ-Anhänger
- 5: Reifenmodul
- 6: Fahrzeugreifen der Zugmaschine
- 7: Fahrzeugreifen des NFZ-Anhängers
- 8: Temperaturkurve des Reifens bzw. im Reifehohlraum
- 9: Temperaturkurve des Temperatursensors im Reifenmodul
- 10: Anfangstemperatur des Reifens bei Fahrtbeginn
- 11: Anfangstemperatur des Temperatursensors
- 12: Reifendruckkurve des Reifens
- 13: Anfangsdruck im Reifen
- 14: Stabiler Temperaturwert
- 15: Stabiler Reifendruckwert
- 16: Zeitdifferenz in der beide Werte (stabiler Temperaturwert und Reifendruckwert) erfasst werden sollten

## Patentansprüche

1. Verfahren zur Überwachung von Reifendruckwerten an Fahrzeugreifen (6,7) von einem Fahrzeug,
mit mindestens den folgenden Schritten,
a) Bereitstellen von Fahrzeugreifen (6,7) mit Reifenmodulen (5),
wobei das Reifenmodul (5) zumindestens einen Temperatursensor und einen Reifendrucksensor aufweist,
b) Durchführen einer Vielzahl von Temperaturmessungen,
wobei die gemessene Temperaturwerte in einem definierten Zeitintervall in einem Datenspeicher auf dem Reifenmodul (5) kontinuierlich zwischen gespeichert werden,
**dadurch gekennzeichnet, dass**
b1) Durchführen einer Vielzahl von Reifendruckmessungen, wobei die gemessenen Reifendruckwerte in einem definierten Zeitintervall in einem Datenspeicher auf dem Reifenmodul (5) kontinuierlich zwischen gespeichert werden,
c) Durchführen eines Wertevergleichs bei dem die gemessenen Temperaturwerte und Reifendruckwerte in dem definierten Zeitintervall mit den letzten aktuell gemessen Temperaturwerten und Reifendruckwerten verglichen wird,
d) Bestimmung eines stabilen Temperaturwertes (14),
wobei der stabile Temperaturwert (14) dann vorliegt, wenn der letzte aktuelle Temperaturwert um weniger als ca. 2 Grad Celsius von allen zwischengespeicherten Temperaturwerten abweicht,
e) Bestimmung eines stabilen Reifendruckwertes (15),
wobei der stabile Reifendruckwert (15) dann vorliegt, wenn der letzte aktuelle Reifendruckwert um weniger als ca. 0,1 bar von allen zwischengespeicherten Reifendruckwerten abweicht,
f) Abspeichern des jeweils aktuellen stabilen Temperaturwertes (14) und des stabilen Reifendruckwertes (15) auf den Speicher des Reifenmoduls (5),
wobei der aktuelle stabile Temperaturwert (14) und der aktuelle stabile Reifendruckwert (15) dann vorliegt, wenn beide Werte innerhalb einer Zeitdifferenz von weniger als einer Minute erfasst worden sind,
g) Übermitteln des aktuellen stabilen Temperaturwertes (14) und des aktuellen stabilen Reifendruckwertes (15) an eine Basisstation (1) außerhalb des Fahrzeuges,
h) Auswerten der empfangenen Daten mit der Basisstation (1),
i) Initiierung einer Warnmeldung an einen Endkunden, wenn die empfangenen stabilen Temperaturwerte (14) und stabilen Reifendruckwerte (15) signifikant von vorgegeben Werten für den Fahrzeugreifen abweicht.

2. Verfahren nach Anspruch 1,
**dadurch gekennzeichnet, dass**
bei der Bestimmung des stabilen Temperaturwertes (14),
der stabile Temperaturwert (14) dann vorliegt, wenn der letzte aktuelle Temperaturwert um weniger als ca. 1 Grad Celsius von allen zwischengespeicherten Temperaturwerten abweicht.

3. Verfahren nach einem der vorhergehenden Ansprüche,
**dadurch gekennzeichnet, dass**
bei der Bestimmung des stabilen Reifendruckwertes (15),
der stabile Reifendruckwert (15) dann vorliegt, wenn der letzte aktuelle Reifendruckwert um weniger als ca. 0,05 bar von allen zwischengespeicherten Reifendruckwerten abweicht.

4. Verfahren nach einem der vorhergehenden Ansprüche,
**dadurch gekennzeichnet, dass**
bei Schritt b) das definierte Zeitintervall ca. 15 Minuten beträgt.

5. Verfahren nach einem der vorhergehenden Ansprüche,
**dadurch gekennzeichnet, dass**
das Reifenmodul (5) alle 16 Sekunden oder alle 128 Sekunden die stabilen Temperaturwerte (14) und stabilen Reifendruckwerte (15) mit einem Funktelegramm versendet.

6. Verfahren nach einem der vorhergehenden Ansprüche,
**dadurch gekennzeichnet, dass**
die Basisstation (1) am Einfahrtstor eines Flottenbetreibers angeordnet ist, damit die Messdaten vom Reifenmodul (5) regelmäßig erfasst werden können.

7. Verfahren nach einem der vorhergehenden Ansprüche,
**dadurch gekennzeichnet, dass**
das Reifenmodul (5) auf einer Reifeninnenseite eines Fahrzeugreifens angeordnet ist, wobei der Temperatursensor die Temperaturwerte des Laufstreifens und/ oder der Seitenwände erfasst.

## Claims

1. Method for monitoring tyre pressure values on vehicle tyres (6, 7) of a vehicle, comprising at least the following steps,
a) providing vehicle tyres (6, 7) with tyre modules (5), the tyre module (5) having at least a temperature sensor and a tyre pressure sensor,
b) carrying out a multiplicity of temperature measurements, the measured temperature values being continuously buffer-stored at a defined time interval in a data memory on the tyre module (5), **characterized in that**
b1) carrying out a multiplicity of tyre pressure measurements, the measured tyre pressure values being continuously buffer-stored at a defined time interval in a data memory on the tyre module (5),
c) carrying out a comparison of values in which the measured temperature values and the tyre pressure values are compared at a defined time interval with the last temperature values and tyre pressure values measured at the time in question,
d) determining a stable temperature value (14), the stable temperature value (14) being obtained when the last temperature value at the time in question deviates by less than about 2 degrees Celsius from all of the buffer-stored temperature values,
e) determining a stable tyre pressure value (15), the stable tyre pressure value (15) being obtained when the last tyre pressure value at the time in question deviates by less than about 0.1 bar from all of the buffer-stored tyre pressure values,
f) storing the stable temperature value (14) and stable tyre pressure value (15) at the respective time in question in the memory of the tyre module (5), the stable temperature value (14) at the time in question and the stable tyre pressure value (15) at the time in question being obtained when both values have been recorded within a time difference of less than one minute,
g) transmitting the stable temperature value (14) at the time in question and the stable tyre pressure value (15) at the time in question to a base station (1) outside the vehicle,
h) evaluating the received data by means of the base station (1),
i) initiating a warning message to a final customer if the received stable temperature values (14) and stable tyre pressure values (15) deviate significantly from the prescribed values for the vehicle tyre.

2. Method according to Claim 1, **characterized in that**, in the determination of the stable temperature value (14), the stable temperature value (14) is obtained when the last temperature value at the time in question deviates from all of the buffer-stored temperature values by less than about 1 degree Celsius.

3. Method according to one of the preceding claims, **characterized in that**, in the determination of the stable tyre pressure value (15), the stable tyre pressure value (15) is obtained when the last tyre pressure value at the time in question deviates from all of the buffer-stored tyre pressure values by less than about 0.05 bar.

4. Method according to one of the preceding claims, **characterized in that**, in step b), the defined time interval is about 15 minutes.

5. Method according to one of the preceding claims, **characterized in that** the tyre module (5) sends the stable temperature values (14) and stable tyre pressure values (15) by a radiogram every 16 seconds or every 128 seconds.

6. Method according to one of the preceding claims, **characterized in that** the base station (1) is arranged at the entry gate of a fleet operator, in order that the measurement data can be regularly recorded from the tyre module (5).

7. Method according to one of the preceding claims, **characterized in that** the tyre module (5) is arranged on an inner side of a vehicle tyre, the temperature sensor recording the temperature values of the tread and/or of the sidewalls.

## Revendications

1. Procédé de surveillance de valeurs de pression de pneu sur les pneumatiques de véhicule (6, 7) d'un véhicule,
comprenant au moins les étapes suivantes consistant à
a) fournir des pneumatiques de véhicule (6, 7) dotés de modules de pneu (5), le module de pneu (5) présentant au moins un capteur de température et un capteur de pression de pneu,
b) effectuer une pluralité de mesures de température, les valeurs de température mesurées étant en continu mises en mémoire tampon dans un intervalle de temps défini dans une mémoire de données sur le module de pneu (5),
**caractérisé par**
b1) l'exécution d'une pluralité de mesures de pression de pneu, les valeurs de pression de pneu mesurées étant en continu mises en mémoire tampon dans un intervalle de temps défini dans une mémoire de données sur le module de pneu (5),
c) l'exécution d'une comparaison de valeurs dans laquelle les valeurs de température et les valeurs de pression de pneu mesurées dans l'intervalle de temps défini sont comparées aux dernières valeurs de température et valeurs de pression de pneu mesurées actuellement,
d) la détermination d'une valeur de température stable (14), la valeur de température stable (14) étant présente si la dernière valeur de température actuelle dévie de moins d'environ 2 degrés Celsius par rapport à toutes les valeurs de température mises en mémoire tampon,
e) la détermination d'une valeur de pression de pneu stable (15), la valeur de pression de pneu stable (15) étant présente si la dernière valeur de pression de pneu actuelle dévie de moins d'environ 0,1 bar par rapport à toutes les valeurs de pression de pneu mises en mémoire tampon,
f) la mémorisation de la valeur de température stable (14) et de la valeur de pression de pneu stable (15) respectivement actuelle dans la mémoire du module de pneu (5), la valeur de température stable actuelle (14) et la valeur de pression de pneu stable actuelle (15) étant présentes si les deux valeurs ont été détectées dans une différence de temps de moins d'une minute,
g) la transmission de la valeur de température stable actuelle (14) et de la valeur de pression de pneu stable actuelle (15) à une station de base (1) en dehors du véhicule,
h) l'évaluation des données reçues à l'aide de la station de base (1),
i) le lancement d'un avertissement destiné à un client final si les valeurs de température stables (14) et les valeurs de pression de pneu stables (15) reçues dévient de façon significative par rapport aux valeurs prédéfinies pour le pneumatique de véhicule.

2. Procédé selon la revendication 1, **caractérisé en ce que** lors de la détermination de la valeur de température stable (14), la valeur de température stable (14) est présente si la dernière valeur de température actuelle dévie de moins d'environ 1 degré Celsius par rapport à toutes les valeurs de température mises en mémoire tampon.

3. Procédé selon l'une quelconque des revendications précédentes, **caractérisé en ce que** lors de la détermination de la valeur de pression de pneu stable (15), la valeur de pression de pneu stable (15) est présente si la dernière valeur de pression de pneu actuelle dévie de moins d'environ 0,05 bar par rapport à toutes les valeurs de pression de pneu mises en mémoire tampon.

4. Procédé selon l'une quelconque des revendications précédentes, **caractérisé en ce qu'**à l'étape b), l'intervalle de temps défini est d'environ 15 minutes.

5. Procédé selon l'une quelconque des revendications précédentes, **caractérisé en ce que** le module de pneu (5) émet toutes les 16 secondes ou toutes 128 secondes les valeurs de température stables (14) et les valeurs de pression de pneu stables (15) par radiogramme.

6. Procédé selon l'une quelconque des revendications précédentes, **caractérisé en ce que** la station de base (1) est disposée au portail d'entrée d'un opérateur de flotte afin de pouvoir détecter régulièrement les données de mesure à partir du module de pneu (5).

7. Procédé selon l'une quelconque des revendications précédentes, **caractérisé en ce que** le module de pneu (5) est disposé sur une face intérieure de pneu d'un pneumatique de véhicule, le capteur de température détectant les valeurs de température de la bande de roulement et/ou des flancs.
